**Europäisches Patentamt**

**European Patent Office**

**Office européen des brevets**

(11) Veröffentlichungsnummer: **0 085 827**

**A1**

(12) # EUROPÄISCHE PATENTANMELDUNG

(21) Anmeldenummer: **83100076.5**

(22) Anmeldetag: **06.01.83**

(51) Int. Cl.³: **B 21 D 43/28**
**B 65 G 57/06**

(30) Priorität: **04.02.82 CH 680/82**

(43) Veröffentlichungstag der Anmeldung:
**17.08.83 Patentblatt 83/33**

(84) Benannte Vertragsstaaten:
**AT DE FR GB IT**

(71) Anmelder: **INVENTIO AG**
**Seestrasse 55**
**CH-6052 Hergiswil NW(CH)**

(72) Erfinder: **Hänni, Eduard, Dipl. Ing.**
**Rosengartenstrasse 10**
**CH-4800 Zofingen(CH)**

(72) Erfinder: **Gygli, Walter**
**Aengistrasse 10**
**CH-4704 Niederbipp(CH)**

(54) **Einrichtung zum Wegführen und Stapeln von Blechabschnitten.**

(57) Mit dieser Einrichtung sollen hinter der Blechschere, mit Hilfe eines Stützrechens und eines Anschlages (4) aus Blechabschnitten (6) an vorbestimmter Stelle, auf einer Palette geordnete Stapel gebildet werden. Blechabfälle die durch das Besäumen oder am Ende einer Blechtafel anfallen, werden von einem separaten unter dem Blech-Zuführtisch angeordneten und unter die Blechschere bewegbaren Abfallbehälter aufgenommen. Um beim Stapeln der Blechabschnitte (6) grosse Beschleunigungen und Geschwindigkeiten erzielen zu können, werden die Blechabschnitte für die horizontalen Bewegungen, durch, am Stützrechen angeordnete, automatisch gesteuerte Mitnehmerbügel (1, 2, 3) gefasst und mitgenommen.

Fig. 2

- 1 -

## Einrichtung zum Wegführen und Stapeln von Blechabschnitten

Die Erfindung betrifft eine Einrichtung zum Wegführen und Stapeln von hinter dem Blechzuführtisch einer Blechschere anfallenden Blechabschnitten, welche einen Stützrechen zur Aufnahme von Blechabschnitten, einen entsprechend der gewünschten Blechabschnittbreite relativ zum Stützrechen horizontal verschiebbaren Anschlag und eine höhenverstellbare, Paletten oder Behälter zur Aufnahme von Blechabschnittstapeln tragende Rollbühne aufweist, wobei für die Stapelung von unmittelbar nach dem Schnitt auf den Stützrechen abgesetzten Blechabschnitten, der Stützrechen zusammen mit dem Anschlag in einem ersten horizontalen Bewegungsschritt wahlweise über einer der Stapelstellen positionierbar ist und der Stützrechen in einem zweiten gleichgerichteten Bewegungsschritt zur Freigabe des Blechabschnittes über die Stapelstelle hinaus verschiebbar ist.

Mit der DE-OS 28 40 668 ist eine Blechschere bekanntgeworden, welche auf der Messer-Rückseite eine Stapelvorrichtung aufweist mit welcher die abgeschnittenen Blechstreifen wahlweise an verschiedenen Stellen stapelbar
sind, und zwar in der Weise, dass verschiedene z.B. nach
Blechstreifengrösse geordnete Stapel oder bei gleichbleibenden Streifengrösse zur besseren Platzausnützung mehrere gleiche Stapel unmittelbar nacheinander bedient werden können. Der abgescherte Blechstreifen wird hinter der
Schneidstelle auf einen Stützrost gelegt und durch, zwischen die parallelen Stäbe des Stützrostes greifende
Stossarme auf einen Kettenförderer geschoben. Mitnehmernocken die an den Ketten des Kettenförderers befestigt
sind, befördern den Blechstreifen auf einen horizontal
über die Stapelfläche hinweg bewegbaren Stützrechen, der
von seiner Ruhelage, kurz bevor die nachlaufende Kante
des Blechabschnittes den Kettenförderer verlässt, auf die
Geschwindigkeit des Kettenförderers beschleunigt wird.
Der Stützrechen wird zusammen mit dem Blechabschnitt gegen einen Anschlag zurückgezogen. Zur sanften Abbremsung
des Blechstreifens wird der Anschlag bevor die vorlaufende Kante des Blechstreifens den Anschlag berührt auf die
Geschwindigkeit des Blechstreifens auf dem Stützrechen
beschleunigt und anschliessend bis zum Stillstand verzögert. Ungefähr beim Uebergang von der Beschleunigung zur
Verzögerung berührt die Blechkante den Anschlag und der
Blechstreifen wird zusammen mit dem Anschlag sanft zum
Stillstand abgebremst, während sich der Stützrechen mit
gleichbleibender Geschwindigkeit weiterbewegt und der
Blechstreifen auf den vorgesehenen Stapel fällt. Die Fallhöhe wird dabei durch eine vertikal verstellbare Rollbühne auf der z.B. eine Palette zur Aufnahme der Blechstreifen ruht, annähernd konstant gehalten.

Ein Nachteil dieser Ausführung liegt darin, dass die Stapeleinrichtung mit kleinen Beschleunigungen und kleinen Geschwindigkeiten arbeiten muss, damit die Blechabschnitte auf dem Stützrechen nicht gleiten und sauber gestapelt werden können. Ein weiterer Nachteil ist der verhältnismässig grosse Platzbedarf der für die hinter der Schnittebene angeordnete Stapeleinrichtung mit dem Stützrost, dem Kettenförderer und dem Stützrechen benötigt wird. Zudem ist nachteilig, dass Abfallbleche beim Besäumen der Blechtafeln wahllos zwischen Schnittebene und Stützrost auf den Boden fallen und umständlich von Hand weggeschafft werden müssen.

Der Erfindung liegt die Aufgabe zugrunde, eine Stapeleinrichtung vorzuschlagen, welche mit sehr grossen Beschleunigungen und Geschwindigkeiten einwandfrei arbeitet, wenig Platz beansprucht und eine Auffangeinrichtung für Abfallbleche besitzt.

Diese Aufgabe wird durch die in den Ansprüchen gekennzeichnete Erfindung gelöst.

Die durch die Erfindung erreichten Vorteile sind im wesentlichen darin zu sehen, dass die möglichen grossen Beschleunigungen und Geschwindigkeiten für das Stapeln der Blechabschnitte es gestatten, elektronisch gesteuerte Tafelscheren optimal auszunutzen, zumal nicht nur die für die Weiterfabrikation bestimmten Blechzuschnitte gestapelt werden, sondern auch die beim Besäumen der Blechtafeln entstehenden Blechabfälle und die am Ende bei jeder Blechtafel übrigbleibenden Abfallbleche von einem separaten Abfallbehälter aufgefangen werden. Durch das Wegfallen der beiden hinter dem Messer angeordneten Zubringereinrichtungen, des Stützrostes mit den Stossarmen und des Kettenförderers, wird einerseits die Gesamtlänge der Stapeleinrichtung reduziert und andererseits eine weitere Zeiteinsparung durch die kürzeren Wege beim Stapeln der Blechabschnitte erreicht.

Auf den beiliegenden Zeichnungen sind Ausführungsbeispiele der Erfindung dargestellt, die im folgenden näher erläutert werden. Es zeigen:

Fig. 1 einen Schnitt durch den Stützrechen im Bereich eines Mitnehmerbügels, welcher in der Ruhestellung liegt,

Fig. 2 einen Schnitt durch den Stützrechen im Bereich eines Mitnehmerbügels, welcher in die Arbeitsstellung gehoben ist,

Fig. 3   einen Längsschnitt durch eine Tafelschere mit angebauter Stapeleinrichtung in Stapelstellung,

Fig. 4   einen Längsschnitt durch eine Tafelschere mit

angebauter Stapeleinrichtung in Abfallschneidstellung,

Fig. 5   die Anordnung eines fahrbaren, auf eine Tragkonstruktion des in Stapelrichtung verschiebbaren Stapelrahmens aufgeschobenen Abfallbehälters,

Fig. 6   als Variante die Anordnung eines auf der Palette für die Blechstapel aufgelegten, speziell niederen Abfallbehälters und

Fig. 7   als weitere Variante die Anordnung eines auf die Rollbühne vor der Palette aufgelegten, speziell niederen Abfallbehälters.

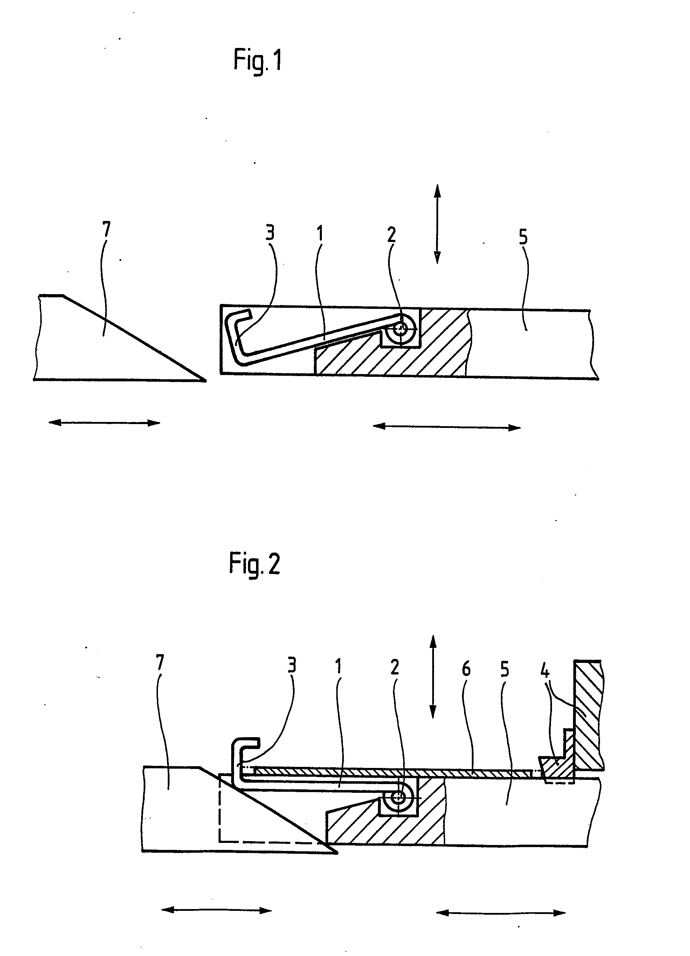

In den Figuren 1 bis 7 sind gleiche Teile mit gleichen Ziffern versehen. In den Figuren 1 und 2 ist mit 1 ein Mitnehmerbügel mit 2 dessen Lagerung im Stützrechen 5 und mit 3 dessen U-förmige Abbiegung am messerseitigen Ende bezeichnet. Ein Anschlag wird mit 4, ein Blechabschnitt mit 6 und eine Betätigungskurve mit 7 bezeichnet.

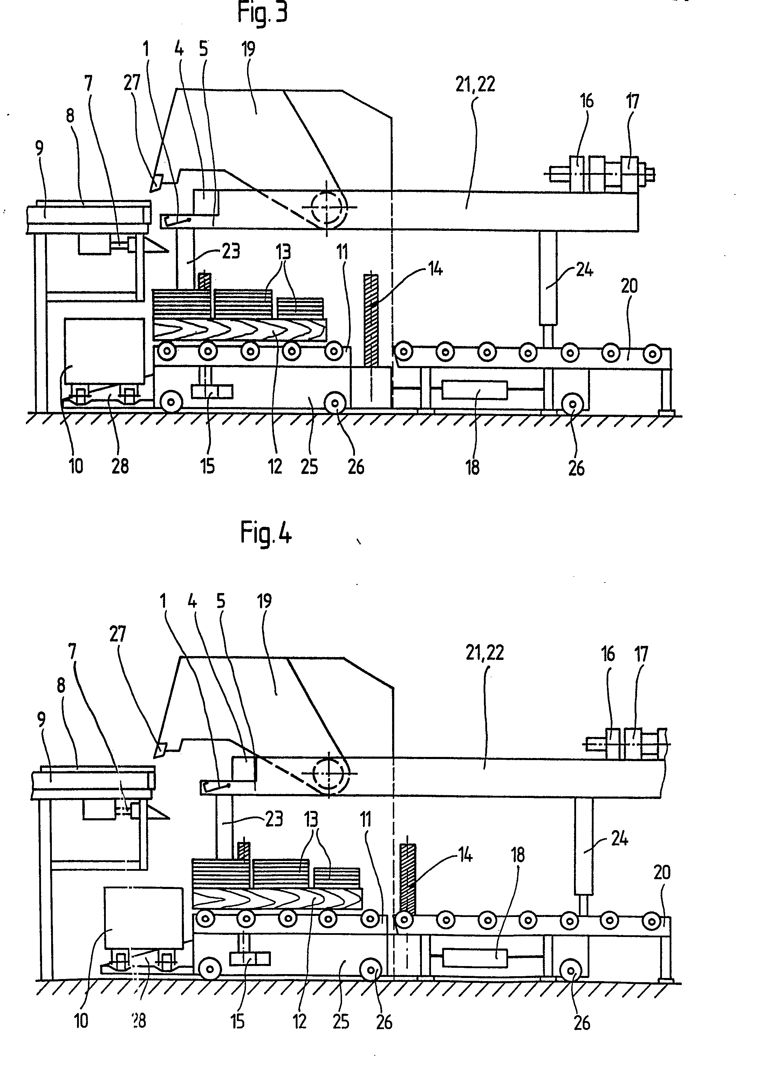

In den Figuren 3 und 4 wird mit 9 ein Blech-Zuführtisch bezeichnet auf welchem Blechtafeln 8 durch einen nicht dargestellten elektronisch gesteuerten und vorprogrammierbaren Frontvorschub einem Messer 27 eines Messerbalkens 19 der Tafelschere zum Zuschneiden zugeführt werden. Ein zur Aufnahme der Blechzuschnitte als Wagen ausgebildeter Stützrechen 5 ist in einem linken und einem rechten, neben dem Messerbalken 19 angeordneten Holm 21, 22 geführt, welcher durch den Antrieb 17 vor- und zurückbewegt wird. In den gleichen Holmen 21, 22 ist ein ebenfalls als Wagen ausgebildeter und unabhängig vom Stützrechen durch den Antrieb 16 bewegbarer und für die genaue Positionierung der Blechabschnitte bestimmter Anschlag 4 geführt. Am messerseitigen Ende des Stützrechens sind die in den Figuren 1 und 2 grösser dargestellten Mitnehmerbügel 1, 2, 3 angeordnet. Unter dem Blech-Zuführtisch ist die Betätigungskurve 7 für die Betätigung der Mitnehmerbügel angeordnet, sowie ein zur Aufnahme der Blechabfälle nötiger Abfallbehälter 10. Eine Rollbühne 11 ist durch vier Spindeln 14, die von einem Antrieb 15 angetrieben werden, schrittweise höhenverstellbar, um die Fallhöhe der zu stapelnden Blechabschnitte 13 stets ungefähr gleich gross zu halten. Die Rollbühne 11 ist zusammen mit den beiden Holmen 21, 22 mit dem Anschlag 4 und dem Stützrechen 5 auf einem gemeinsamen Stapelrahmen 25 aufgebaut und durch einen Hydraulik-Zylinder 18 innerhalb eines begrenzten Weges in Längsrichtung vor- und zurückschiebbar. Am messerseitigen Ende des Stapelrahmens 25 ist eine den Abfallbehälter aufnehmende Tragkonstruktion 28 angeordnet. Die beiden Holme 21, 22 werden je mit einem Einfachzylinder und einem Differentialzylinder mit dem längsverschiebbaren Stapelrahmen 25 für die Schnittbewegung vertikal verschiebbar verbunden. Auf der Rollbühne ist zum Stapeln der Blechabschnitte 13 beispielsweise eine Palette 12 oder ein anderes Stapelgerät aufgelegt. Hinter der Rollbühne 11 befindet sich eine fest installierte Parkrollbahn 20 die als Uebernahmestation für Hubstapler oder als Zubringer für eine nicht gezeichnete Transporteinrichtung dient.

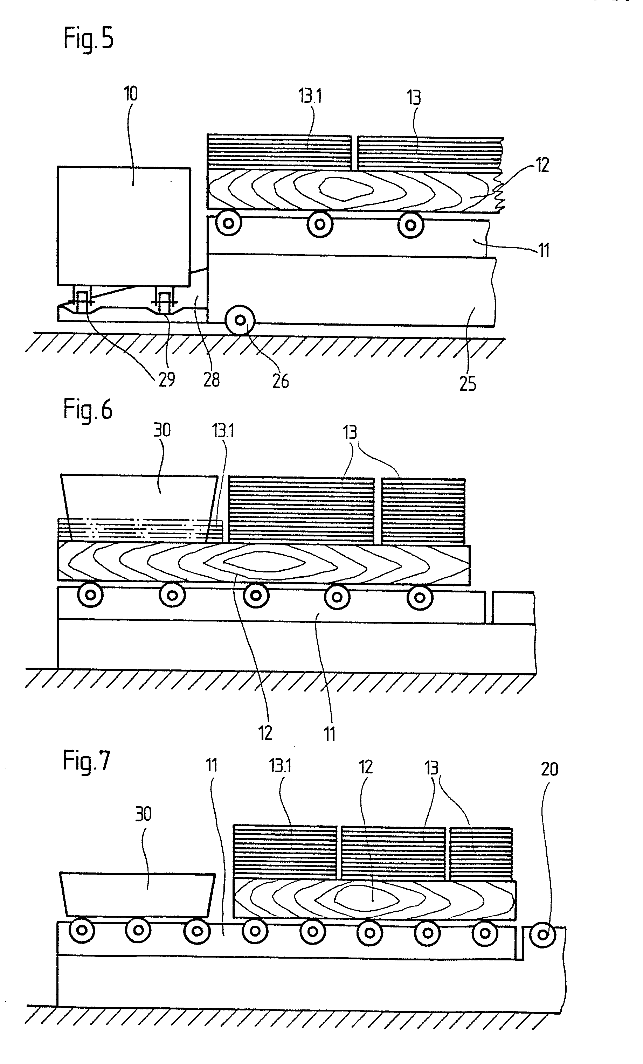

In Fig. 5 ist mit 10 der fahrbare Abfallbehälter bezeichnet, welcher quer zur Stapelrichtung über die Führungsschienen 29 auf die Tragkonstruktion 28 aufgeschoben ist. Auf der Rollbühne 11 ist die Palette 12 mit dem ersten Blechstapel 13.1 und den übrigen Blechstapeln 13 aufgelegt. Die Rollbühne 11 und die Tragkonstruktion 28 werden vom in Stapelrichtung verschiebbaren Stapelrahmen 25 mit den Laufrollen 26 getragen.

In Fig. 6 ist mit 30 der speziell niedere auf die Palette 12, anstelle des ersten Blechstapels 13.1 aufgelegte Abfallbehälter bezeichnet. Die Palette 12 ist in der Stapelstellung auf der Rollbühne 11 angeordnet.

In Fig. 7 ist mit 30 der speziell niedere vor der Palette 12 auf die Rollbühne 11 aufgelegte Abfallbehälter bezeichnet. Die hinter der Rollbühne 11 angeordnete feste Parkrollbahn erhält die Ziffer 20, die Blechstapel erhalten die Ziffern 13.1 und 13.

Die vorstehend beschriebene Stapeleinrichtung arbeitet wie folgt: Die Blechtafeln werden auf dem Blech-Zuführtisch 9 mittels eines elektronisch gesteuerten und vorprogrammierten Frontvorschubes dem Messer 27 des Messerbalkens 19 zum Zuschneiden zugeführt. Bevor ein für die Fabrikation bestimmter Blechstreifen zugeschnitten werden kann, werden in den meisten Fällen zuerst die Kanten der Blechtafel besäumt. Zu diesem Zweck wird die Tafelschere in die Abfallschneidstellung gemäss Fig. 4 gebracht, d.h. der gemeinsame Stapelrahmen 25 auf dem die beiden Holme 21, 22 in welchen die Wagen des Anschlages 4 und des Stützrechens 5 laufen, die höhenverstellbare Rollbühne 11 und die, den Abfallbehälter 10 aufnehmende Tragkonstruktion 28 aufgebaut sind, wird durch den Hydraulikzylinder 18 um 200 mm rückwärts gezogen. Beim Besäumen fällt somit der Blechabschnitt als Abfallstück zwischen Blech-Zuführtisch und zurückgezogener Stapeleinrichtung direkt in den unter das Messer gezogene Abfallbehälter 10. Mit der Zuführbewegung für den ersten Blechstreifen wird der schiebbare Rahmen 25 wieder in die Stapelstellung gemäss Fig. 3 zurückgestossen. Beim Zuschneiden senken sich mit dem Messer 27 auch die beiden auf Hydraulik-Zylindern ruhenden Seitenholme und mit diesen auch der Stützrechen und der Anschlag. Für den ersten messerseitigen Stapel 13.1 kommen die Mitnehmerbügel 1, 2, 3 und die zugehörige Betätigungskurve 7 noch nicht zum Einsatz. Der zugeschnittene Blechstreifen wird zwischen Messer und positioniertem Anschlag vom Stützrost aufgenommen. Der Stützrost bewegt sich nun unter dem Anschlag schlagartig rückwärts und der Blechstreifen fällt, durch den Anschlag an der Rückwärtsbewegung gehindert, auf die vorbestimmte Stapelstelle auf der auf der Rollbühne in richtige Höhenlage gebrachte Palette. Für alle nächsten Stapel wird gleichzeitig mit dem Zuschnitt die Betätigungskurve zu den Mitnehmerbügeln in Stapelrichtung über das Messer hinaus bewegt, so dass das Ende des U-förmig ausgebildeten Mitnehmerbügels über die Oberkante des Stützrechens in die Arbeitsstellung gemäss Fig. 2 ragt. Der zugeschnittene Blechstreifen wird wiederum vom Stützrechen aufgenommen, wobei den Scherkanten des Blechstreifens auf einer Seite der Anschlag und auf der anderen Seite der Mitnehmerbügel gegenüberliegt. Bei der anschliessenden Horizontalbewegung wird der Stützrechen mit dem Blechstreifen und der Anschlag bis auf maximum 7 m/s$^2$ beschleunigt. Der Blechstreifen gleitet dabei vorerst auf dem Stützrechen bis die rückseitige Blechkante am Haken des Mitnehmerbügels ansteht. Der Mitnehmerbügel der sich mittlerweilen aus dem Wirkungsbereich der Betätigungskurve entfernt hat, fällt durch sein Eigengewicht nach unten, bleibt aber mit dem oberen abgebogenen Hakenende an der Kante des unterfahrenen Blechstreifens hängen und nimmt den Blechstreifen mit. Kurz bevor der Anschlag die für den Blechstreifen gewünschte Stapelstelle erreicht, tritt eine Verzögerungsphase ein, bei welcher der Stützrechen und der Anschlag derart verzögert werden, dass der Blechstreifen auf dem Stützrechen eine Relativbewegung gegen den Anschlag ausführt, wobei die rückseitige Kante des Blechstreifens das obere abgebogene Hakenende des Mitnehmerbügels verlässt. Der Mitnehmerbügel fällt durch sein Eigengewicht ganz nach unten auf den Anschlag im Stützrechen, in die Ruhestellung gemäss Fig. 1. Der Anschlag bleibt an der vorbestimmten Stelle stehen, während der Stützrechen seine Rückwärtsbewegung wieder beschleunigt fortsetzt bis zum vollständigen Rückzug desselben aus dem Bereich der Stapelstelle. Der Blechstreifen wird dabei durch den stillstehenden Anschlag zurückgehalten und fällt auf die vorgesehene Stapelstelle auf der Palette. Die Rollbühne auf welcher die Palette zum Stapeln der Blechstreifen aufgelegt ist, ist durch vier angetriebene Spindeln höhenverstellbar und ruht zu Beginn der Zuschnittarbeiten in der obersten Position. Die zunehmende Stapelhöhe wird durch das schrittweise Absenken der Rollbühne ausgeglichen. Damit wird auch die Fallhöhe für die zu stapelnden Bleche annähernd konstant gehalten. Sobald die Palette voll beladen ist und die Rollbühne die Höhe der Parkrollbahn erreicht hat, wird sie weggeführt und durch eine neue, leere Palette ersetzt.

Anstelle der im Beispiel vorgeschlagenen Ausführung können für die mit einer Drehachse gelagerten Mitnehmerbügel beispielsweise auch vertikal verschiebbare Mitnehmerbolzen mit einer Anfräsung für die Mitnahme der Blechstreifen am Stützrechen angeordnet werden. Die Mitnehmerbolzen werden ebenfalls in zwei Stellungen gehalten, in einer durch ihr Eigengewicht unterhalb der Stützrechen-Aufnahmefläche eingenommenen Ruhestellung und in einer durch eine Betätigungskurve nach oben gedrückten Arbeitsstellung, bei welcher der obere Teil der Mitnehmerbolzen mit der Anfräsung zur Aufnahme der rückseitigen Kante der Blechabschnitte über die Oberkante des Stützrechens hinausragt.

Anstelle des Eigengewichtes des Mitnehmerbügels oder des Mitnehmerbolzens welches für die Bewegung der Mitnehmer in ihre Ruhelage benutzt wird, könnte auch die Kraft einer Druck- oder einer Zugfeder eingesetzt werden.

Anstelle der für die Abfallschneidstellung gemäss Fig. 4 nötigen horizontalen Rückwärtsverschiebung des gemeinsamen Stapelrahmens um ca. 200 mm, könnten unter dem Messer angeordnete, steuerbare Leitbleche vorgesehen sein, welche die Abfallbleche beispielsweise beim Besäumen der Blechtafeln in einen quer unter den Blech-Zuführtisch eingeschobenen Abfallbehälter leiten.

Eine andere Möglichkeit die horizontale Rückwärtsverschiebung des gemeinsamen Stapelrahmens zu umgehen, wäre durch verschiedene Anordnungen eines speziell niederen Abfallbehälters auf der Palette, anstelle des ersten Blechstapels gemäss Fig. 6 oder auf der Rollbühne direkt vor der Palette gemäss Fig. 7 gegeben. Allerdings müssten bei der Ausführung gemäss Fig. 6 die durch die Höhe des Abfallbehälters bestimmte grössere Fallhöhe beim Stapeln der unteren Blechzuschnitte und die dadurch eventuell entstehenden weniger exakten Stapel in Kauf genommen werden.

Patentansprüche:

1. Einrichtung zum Wegführen und Stapeln von hinter dem Blechzuführtisch einer Blechschere anfallenden Blechabschnitten, welche einen Stützrechen zur Aufnahme von Blechabschnitten, einen entsprechend der gewünschten Blechabschnittbreite relativ zum Stützrechen horizontal verstellbaren Anschlag und eine höhenverstellbare, Paletten oder Behälter zur Aufnahme von Blechabschnittstapeln tragende Rollbühne aufweist, wobei für die Stapelung von unmittelbar nach dem Schnitt auf den Stützrechen abgesetzten Blechabschnitten, der Stützrechen zusammen mit dem Anschlag in einem ersten horizontalen Bewegungsschritt wahlweise über einer der Stapelstellen positionierbar ist und der Stützrechen in einem zweiten gleichgerichteten Bewegungsschritt zur Freigabe des Blechabschnittes über die Stapelstelle hinaus verschiebbar ist, d a d u r c h   g e k e n n z e i c h n e t, dass am Stützrechen (5), der sich mit dem Messer (27) vertikal bewegt, messerseitig ein Mitnehmerbügel (1) mit einem Finger (3) drehbar gelagert ist der unter der Wirkung einer unter dem Blechzuführtisch (9) angeordneten zwischen einer Ruhe- und einer Betätigungsstellung verschiebbaren Betätigungskurve (7), in deren Betätigungsstellung, bei an den Blechzuführtisch herangeführtem Stützrechen (5) in eine Mitnahmestellung gedreht ist, in der der Finger (3) über die Oberfläche des Stützrechens (5) hinausragt, Startbeschleunigung und Stoppverzögerung des Stützrechens (5) bei der Ausführung der Bewegungsschritte, die Verschiebung der Blechabschnitte (6) auf dem Stützrechen (5) bewirkende Beträge aufweisen, und für das Auffangen der Abfallblechabschnitte ein Abfallbehälter 10, 30 vorgesehen ist.

2. Stapeleinrichtung nach Anspruch 1,

d a d u r c h   g e k e n n z e i c h n e t ,

dass der Finger (3) des Mitnehmerbügels (1) U-förmig ausgebildet ist und ein abgebogenes, in der Mitnahmestellung von der rückseitigen Kante des beim Start des ersten Bewegungsschrittes verschobenen Blechabschnittes (6) unterfahrenes und beim Stopp freigegebenes Ende aufweist.

3. Stapeleinrichtung nach Anspruch 1,

d a d u r c h   g e k e n n z e i c h n e t ,

dass die Betätigungskurve (7) in ihrer Ruhestellung vor der vertikalen Schnittebene angeordnet und in ihrer Betätigungsstellung hinter die Schnittebene in den Bereich des abgesenkten Stützrechens verschiebbar ist.

4. Stapeleinrichtung nach Anspruch 1,

d a d u r c h   g e k e n n z e i c h n e t ,

dass die auf einem gemeinsamen, durch Rollen (26) getragenen Stapelrahmen (25) aufgebaute Rollbühne (11) Seitenholme (21, 22) mit Anschlag (4) und Stützrechen
(5) innerhalb eines begrenzten Weges in der Richtung
der Stapel-Bewegungsschritte von einer Stapelstellung
in eine Abfallschneidstellung horizontal verschiebbar
ist.

5. Stapeleinrichtung nach Anspruch 4,
   d a d u r c h   g e k e n n z e i c h n e t ,
   dass am Rahmen (25) unter dem Messer (27) eine, einen
   quer zur Richtung der Stapelbewegungsschritte einschiebbaren Abfallbehälter (10) aufnehmende Tragkonstruktion (28) angeordnet ist.

6. Stapeleinrichtung nach einem der Ansprüche 4 oder 5,
   d a d u r c h   g e k e n n z e i c h n e t ,
   dass zwischen dem Rahmen (25) und einer festen Parkrollbahn (20) eine den Rahmen (25) von der Stapelstellung in die Abfallschneidstellung bewegbare Antriebseinheit (18) angeordnet ist.

7. Stapeleinrichtung nach Anspruch 1,
   d a d u r c h   g e k e n n z e i c h n e t ,
   dass der Abfallbehälter (30) auf der Palette (12) anstelle des ersten Blechstapels (13.1) angeordnet ist.

8. Stapeleinrichtung nach Anspruch 1,
   d a d u r c h   g e k e n n z e i c h n e t ,
   dass der Abfallbehälter (30) auf der Rollbühne (11) vor der für die Aufnahme der Blechstapel (13) vorgesehenen Palette (12) angeordnet ist, wobei die Höhe
des Abfallbehälters (30) etwa gleich wie die Höhe der
Palette (12) vorgesehen ist.

Fig. 1

Fig. 2

0085827

Fig. 3

Fig. 4

0085827

Fig.5

Fig.6

Fig.7

Europäisches
Patentamt

EUROPÄISCHER RECHERCHENBERICHT

0085827
Nummer der Anmeldung

EP    83 10 0076

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| X | DE-A-2 621 322   (MAKEEV) <br> * Insgesamt * | 1-8 | B 21 D   43/28 <br> B 65 G   57/06 |
| X | DE-A-2 325 519   (MAKEEW) <br> * Insgesamt * | 1-8 | |
| A | FR-A-2 315 341   (ETABLISSEMENTS PAIN) | | |
| A | DE-A-1 023 946   (SALZGITTER) | | |
| A | DE-A-2 308 419   (HWM) | | |
| A,D | EP-A-0 009 462   (HAEMMERLE) | | |

RECHERCHIERTE SACHGEBIETE (Int. Cl. ³)

B 21 D
B 65 G

Der vorliegende Recherchenbericht wurde für alle Patentansprüche erstellt.

| Recherchenort <br> DEN HAAG | Abschlußdatum der Recherche <br> 11-03-1983 | Prüfer <br> PEETERS L. |
|---|---|---|

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

 

& : Mitglied der gleichen Patentfamilie, übereinstimmendes Dokument

EPA Form 1503. 03 82